# FASCICULE DE BREVET EUROPEEN

(11) **EP 0 513 896 B1**
(45) Date de publication et mention de la délivrance du brevet: **11.10.1995**
(21) Numéro de dépôt: 92201236.4
(22) Date de dépôt: 04.05.1992
(51) Int. Cl.: A01N 1/02

(54) **Milieu de conservation d'organes, de tissus ou de cellules**
Medium zur Konservierung von Organen, Gewebe oder Zellen
Medium for the conservation of organs, tissues or cells

(30) Priorité: 17.05.1991 FR 9106081
(43) Date de publication de la demande: 19.11.1992
(73) Titulaire: OPSIA PHARMA, 31320 Castanet Tolosan (FR)
(72) Inventeur: Reboul, Gérard, F-31500 Toulouse (FR); Feurer, Bernard, F-31450 Montlaur (FR); Degre, Michel, F-11170 Alzonne (FR)
(74) Mandataire: Cabinet BARRE LAFORGUE & associés

(56) Documents cités:
- EP-A- 215 138
- EP-A- 440 925
- GB-A- 2 052 979
- BIOCHEMICA ET BIOPHYSICA ACTA vol. 763, no. 4, 19 Décembre 1983, AMSTERDAM pages 377 - 382; S. HASHIZUME ET. AL.: 'Identification of lactoferrin as an essential growth factor for human lymphocytic cell lines in serum-free medium'
- CHEMICAL PATENTS INDEX, BASIC ABSTRACTS JOURNAL Section Ch, Week 7945, Derwent Publications Ltd., London, GB; Class C, AN 81975B
- Document AFNOR: S 90-702

## Description

L'invention concerne un nouveau milieu de conservation d'organes vivants ou de tissus biologiques. Elle s'applique en particulier pour réaliser un milieu de conservation de cornée, apte à maintenir de façon remarquable la densité cellulaire endothéliale et à favoriser la prise ultérieure du greffon.

La greffe d'organe est aujourd'hui la seule voie maîtrisée pour remplacer des organes vitaux ou non. Un des problèmes est de réunir le receveur et l'organe en un même endroit tout en conservant la plus grande vitalité à l'organe pour une bonne prise du greffon. Cela passe par une bonne vitalité cellulaire des tissus qui composent le greffon.

Il existe de nombreux milieux de conservation ou milieux de culture possédant une base nutritive, qui ont une certaine action proliférative. Toutefois, cette action proliférative des milieux connus est généralement insuffisante pour assurer le développement cellulaire souhaité. De plus, ces milieux ne semblent pas présenter une action anticollagénasique (qui consiste en une inhibition de l'activité des collagénases, destructrices des collagènes) et ces milieux sont inaptes à s'opposer à la destruction au moins partielle des collagènes des tissus par les collagénases ; par exemple les milieux de conservation d'organes, actuellement utilisés, assurent le plus souvent une vitalité médiocre du greffon et n'autorisent qu'une durée de conservation limitée.

L'invention se propose d'améliorer les performances des milieux de conservation d'organes (humains ou non) ou de tissus.

A cet effet, le milieu de conservation visé par l'invention comprend une base nutritive biologique liquide, notamment milieu de culture cellulaire, et se caractérise en ce qu'il comporte une proportion minoritaire de protéines lactopéroxydases, et/ou de protéines lactoferrines. Dans le cas de la lactoferrine, la proportion préférentielle est comprise entre 0,01 et 30 grammes de lactoferrine par litre de milieu. Dans le cas de la lactoperoxydase, cette proportion est comprise entre 0,01 et 5 grammes de milieu.

La lactoferrine et la lactopéroxydase sont deux protéines existant dans diverses sécrétions des mammifères (lait, salive, larmes), dont on a décrit les effets antibactériens et effet prolifératif sur les cellules sanguines libres ("Hashizume, Identification of lactoferrin as an essential growth factor for human lymphocytic cell lines in serum free medium, Biochimica et Biophysica Acta, 763-1983 p. 377-382"). Cependant, l'effet prolifératif sur des cellules liées (tissus, organes) est un phénomène fondamentalement différent. Les auteurs de la publication sus-évoquée ont par ailleurs constaté que l'effet prolifératif était limité aux cellules libres lymphocytiques humaines et n'existait pas pour les cellules lymphocytiques de souris ou d'autres types de cellules libres.

Les inventeurs ont mis en évidence un effet facteur de croissance de ces protéines sur les tissus et organes vivants. Cet effet a été mis en évidence en travaillant in vitro sur des fibroblastes de cornée de lapin (lignée établie n° CCL6O" nomenclature "ATCC"), cultivés dans du sérum de veau foetal à 3 % enrichi de la protéine testée, par comparaison à un témoin cultivé dans du sérum de veau foetal à 3 % en l'absence de ladite protéine.

De plus, afin d'évaluer les performances du milieu conforme à l'invention sur la conservation d'un organe, a été apprécié l'état de cornées humaines destinées à une kératoplastie transfixiante, conservées, d'une part, dans le milieu enrichi précité, d'autre part, dans le milieu témoin. La conclusion montre une bien meilleure conservation des greffons dans les milieux conformes à l'invention en comparaison avec les milieux similaires non enrichis des protéines précitées.

Enfin, ces expérimentations ont montré que la lactoferrine avait une action anticollagénasique, limitant la dégradation tissulaire par inhibition de l'activité des métalloenzymes.

Il peut être affirme dans ces conditions qu'un milieu de conservation enrichi de lactoferrine et/ou lactopéroxydase augmente sensiblement et de façon reproductible la viabilité des greffons et par là, donne une meilleure chance de prise entre le greffon et l'hôte. Le milieu conforme à l'invention peut en particulier être utilisé pour la conservation de cornées, celle-ci s'effectuant de préférence à 4° C.

L'invention s'étend à l'application des protéines lactopéroxydases ou des protéines lactoferrines pour engendrer ou accroître une action proliférative dans un milieu de conservation biologique. Elle s'étend également à l'application des protéines lactoferrines pour engendrer ou accroître une action anticollagénasique dans un tel milieu.

### ETUDE DE L'EFFET DE LA LACTOFERRINE SUR UNE CULTURE CELLULAIRE TYPE CELLULES LIEES

La lactoferrine (de même que la lactopéroxydase dans les essais suivants) a été associée à un milieu de culture cellulaire minimal ("MEM") additionné de 3 % de sérum de veau foetal.
1/ Détermination de la dose non cytotoxique maximale ou DNC : 50 g/l. A 10 g/l, on trouve 13 % de mortalité cellulaire.
2/ Effet prolifératif en fonction de la dose en lactoferrine.

| INDICE DE CROISSANCE | TEMOIN | 0,1 g/l | 5 g/l | 25 g/l | 50 g/l |
|---|---|---|---|---|---|
| + 3 jours | 100 | 149 | 142 | 103 | 49 |
| + 6 jours | 100 | 137 | 121 | 107 | 48 |

La lactoferrine stimule très efficacement la croissance de fibroblastes entre 0,1 g/l et 25 g/l ; comptetenu des résultats obtenus, l'on peut considérer que la proportion à prévoir est comprise entre 0,01 g/l et 30 g/l pour assurer une stimulation satisfaisante.

### EFFET DE LA LACTOPEROXYDASE SUR UNE CULTURE CELLULAIRE TYPE CELLULES LIEES

1/ Détermination de la dose non cytotoxique maximale ou DNC = 10 % poids/volume. A 50 g/l, on trouve 7 % de mortalité cellulaire.
2/ Effet prolifératif en fonction de la dose en lactopéroxydase.

| INDICE DE CROISSANCE | TEMOIN | 0,2 g/l | 1 g/l | 5 g/l | 10 g/l |
|---|---|---|---|---|---|
| + 3 jours | 100 | 119 | 114 | 98 | 75 |
| + 6 jours | 100 | 116 | 120 | 108 | 85 |

La lactopéroxydase stimule très efficacement la croissance des fibroblastes entre 0,2 g/l et 1 g/l ; l'on peut considérer que la proportion à prévoir est comprise entre 0,01 g/l et 5 g/l pour obtenir une stimulation satisfaisante.

La lactopéroxydase et la lactoferrine ont donc un effet facteur de croissance "like".

### EFFET DE L'ASSOCIATION DE LACTOFERRINE ET LACTOPEROXYDASE SUR LA CONSERVATION DE LA CORNEE HUMAINE

Le milieu de conservation qui a été réalisé pour ces essais présente la composition suivante :
Glucose : 4 g/l
Acides aminés : 1,74 g/l
Vitamines : 31 mg/l
Electrolytes
Antibiotiques : 300 mg/l
Sulfate de chondroïtine : 20 g/l
Lactoferrine : 5 g/l
Lactoperoxydase : 3 g/l
Tampon stabilisateur de pH : 9 g/l
Excipient : eau qsp
pH : 7,4
Osmolarité : 320 mOsm/kgH₂O

### PROTOCOLE

L'étude est réalisée sur 20 cornées humaines, excisées avec un anneau cornéo-scléral de 2 mm sous hotte à flux laminaire, sans effondrement de la chambre antérieure, afin d'éviter tout traumastime de l'endothélium.

L'âge moyen des donneurs est de 73,1 ans (minimum 57 ans, maximum 86 ans). Le délai moyen entre le décès et le prélèvement est de 8,4 heures (minimum 4 heures, maximum 12 heures). Le délai moyen entre le prélèvement et la mise en conservation à 4° C est de 8,2 heures (minimum 4 heures, maximum 12 heures).

Les 20 cornées humaines sont séparées en deux groupes de 10. Pour chaque paire, une cornée est conservée pendant 7 jours, l'autre cornée est conservée pendant 14 jours dans le milieu.

Avant mise en conservation, une coloration vitale au bleu trypan 0,3 % (1 minute) et une dilatation osmotique des espaces inter-cellulaires dans du sérum physiologique (4 minutes) sont réalisées. La densité endothéliale et le pourcentage de cellules mortes sont calculés à l'aide d'une grille micrométrique montée sur un microscope optique. La mesure de l'épaisseur cornéenne est réalisée au microscope à l'aide d'une vis micrométrique après mise au point sur l'épithélium, puis sur l'endothélium.

Les mêmes opérations sont réalisées à la fin de la période de conservation (7ème jour ou 14ème jour).

### MORTALITE CELLULAIRE

Après 7 jours de conservation, le taux de mortalité cellulaire moyen est de 0,9 % pour un taux de mortalité cellulaire initial de 0,6 %.

Après 14 jours de conservation, le taux de mortalité cellulaire moyen est de 1,5 % pour un taux de mortalité cellulaire initial de 0,7 %.

Les différences entre les deux groupes (7ème et 14ème jour) et les différences de chacun des groupes par rapport à JO (jour d'origine) ne sont pas significatives : le taux de mortalité est négligeable.

### DENSITE ENDOTHELIALE

Dans le cas de la conservation à 7 jours, la densité cellulaire moyenne à JO des cornées est de 2710 cellules/mm² (minimum 2200, maximum 3400). Après 7 jours de conservation, elle atteint 2690 cellules/mm² (minimum 2200, maximum 3300). La perte cellulaire endothéliale moyenne est faible : 20 cellules/mm². Sur les 10 cornées observées, 8 ne présentent aucune perte cellulaire endothéliale, les 2 cornées restantes ayant subi une perte de 100 cellules/mm².

Dans le cas de la conservation à 14 jours, la densité cellulaire moyenne à JO des cornées est de 2660 cellules/mm² (minimum 2000, maximum 3400). Après 14 jours de conservation, elle atteint 2490 cellules/mm² (minimum 2000, maximum 3000). La perte cellulaire endothéliale moyenne est modérée : 170 cellules/mm². Sur les 10 cornées observées, 3 ne présentent aucune perte cellulaire endothéliale, 3 ont perdu 100 cellules/mm², 4 ont perdu plus de 100 cellules/mm².

Le maintien de la densité cellulaire endothéliale des cornées conservées dans le milieu de l'invention s'avère satisfaisant après 7 jours et après 14 jours de conservation ; dans les milieux de conservation équivalents mais dépourvus de lactoferrine et lactopéroxydase, la densité endothéliale chute fortement dès le 7ème jour.

### EPAISSEUR DU GREFFON CORNEEN

L'épaisseur moyenne des cornées avant conservation est de 0,48 mm ; elle est identique pour les deux groupes de cornées.

Après 7 jours de conservation, elle atteint 0,52 mm (+ 0,04 mm) et après 14 jours de conservation 0,55 mm (+ 0,07 mm).

Le taux d'épaississement du greffon cornéen après 7 jours et après 14 jours de conservation dans le milieu de l'invention reste tout à fait modéré lorsqu'on le compare aux études publiées sur d'autres solutions de conservation. (Il est inférieur à 15 % à 14 jours alors que les plus performants des milieux existants provoquent un taux d'épaississement supérieur à 30 %).

## Revendications

1. Utilisation d'une base nutritive biologique liquide comportant une proportion minoritaire de protéines lactopéroxydases et/ou de protéines lactoferrines pour réaliser un milieu de conservation d'organes ou de tissus comprenant des fibroblastes et/ou des cellules endothéliales et/ou des cellules épithéliales.

2. Utilisation selon la revendication 1, dans laquelle la base nutritive comporte, en association, de la lactoferrine et de la lactopéroxydase.

3. Utilisation selon l'une des revendications 1 ou 2, dans laquelle la base nutritive comporte entre 0,01 et 30 grammes de lactoferrine par litre de milieu.

4. Utilisation selon l'une des revendications 1, 2 ou 3, dans laquelle la base nutritive comporte entre 0,01 et 5 grammes de lactopéroxydase par litre de milieu.

5. Utilisation selon l'une des revendications 1 à 4, dans laquelle la base nutritive est un milieu de culture cellulaire.

6. Utilisation selon l'une des revendications précédentes, dans laquelle la base nutritive comporte en milieu aqueux du glucose, des acides aminés, des vitamines, des électrolytes, des antibiotiques, du sulfate de chondroïtine, un tampon stabilisateur de pH, de la lactoferrine et de la lactopéroxydase.

7. Utilisation selon l'une des revendications 1 à 6 pour réaliser un milieu de conservation de cornée.

8. Application des protéines lactopéroxydases ou des protéines lactoferrines, pour engendrer ou accroître une action proliférative dans un milieu de conservation d'organes ou de tissus comprenant des fibroblastes et/ou des cellules endothéliales et/ou des cellules épithéliales.

9. Application des protéines lactoferrines pour engendrer ou accroître une action anticollagénasique dans un milieu de conservation d'organes ou de tissus comprenant des fibroblastes et/ou des cellules endothéliales et/ou des cellules épithéliales.

## Claims

1. Use of a liquid biological nutrient base comprising a minor proportion of lactoperoxydase proteins and/or lactoferrin proteins in order to provide a medium for the conservation of organs or tissues comprising fibroblasts and/or endothelial cells and/or epithelial cells.

2. Use according to Claim 1 whereby the nutrient base comprises a combination of lactoferrin and lactoperoxydase.

3. Use according to one of Claims 1 or 2 whereby the nutrient base comprises between 0.01 and 30 grammes of lactoferrin per litre of medium.

4. Use according to one of Claims 1, 2 or 3 whereby the nutrient base comprises between 0.01 and 5 grammes of lactoperoxydase per litre of medium.

5. Use according to one of Claims 1 to 4 whereby the nutrient base is a cellular culture medium.

6. Use according to one of the preceding claims whereby the nutrient base comprises glucose, amino acids, vitamins, electrolytes, antibiotics, chondroitin sulphate, a pH-stabilising buffer, lactoferrin and lactoperoxydase in aqueous medium.

7. Use according to one of Claims 1 to 6 in order to provide a medium for cornea conservation.

8. Application of lactoperoxydase proteins or lactoferrin proteins in order to bring about or enhance a proliferative effect in a medium for the conservation of organs or tissues comprising fibroblasts and/or endothelial cells and/or epithelial cells.

9. Application of lactoferrin proteins in order to bring about or enhance an anticollagenous effect in a medium for the preservation of organs or tissues comprising fibroblasts and/or endothelial cells and/or epithelial cells.

## Patentansprüche

1. Gebrauch einer flüssigen biologischen Nährstoffbasis, umfassend einen minoritären Anteil an Lactoperoxydaseproteinen und/oder Lactoferrinproteinen, um ein Medium zur Konservierung von Fibroblaste und/oder Endothelialzellen und/oder Epithelialzellen umfassenden Organen bzw. Geweben zu schaffen.

2. Gebrauch nach Anspruch 1, bei dem die Nährstoffbasis Lactoferrin und Lactoperoxydase gemeinsam umfaßt.

3. Gebrauch nach einem der Ansprüche 1 oder 2, bei dem die Nährstoffbasis zwischen 0,01 und 30 Gramm Lactoferrin pro Liter Medium umfaßt.

4. Gebrauch nach einem der Ansprüche 1, 2 oder 3, bei dem die Nährstoffbasis zwischen 0,01 und 5 Gramm Lactoperoxydase pro Liter Medium umfaßt.

5. Gebrauch nach einem der Ansprüche 1 bis 4, bei dem die Nährstoffbasis ein Zellkulturmedium ist.

6. Gebrauch nach einem der vorstehenden Ansprüche, bei dem die Nährstoffbasis Glucose, Aminosäuren, Vitamine, Elektrolyten, Antiobiotika, Chondroitinsulfat, einen pH-stabilisierenden Puffer, Lactoferrin und Lactoperoxydase in wässerigem Medium umfaßt.

7. Gebrauch nach einem der Ansprüche 1 bis 6 zwecks Schaffung eines Mediums für Korneakonservierung.

8. Anwendung von Lactoperoxydaseproteinen oder Lactoferrinproteinen zur Erzeugung oder Intensivierung eines Wuchereffekts in einem Medium zur Konservierung von Fibroblaste und/oder Endothelialzellen und/oder Epithelialzellen umfassenden Organen bzw. Geweben.

9. Anwendung von Lactoferrinproteinen zur Erzeugung oder Intensivierung eines antikollagenen Effekts in einem Medium zur Konservierung von Fibroblaste und/oder Endothelialzellen und/oder Epithelialzellen umfassenden Organen bzw. Geweben.
